# EUROPÄISCHE PATENTSCHRIFT

(11) **EP 2 049 292 B1**
(45) Veröffentlichungstag und Bekanntmachung des Hinweises auf die Patenterteilung: **10.02.2010**
(21) Anmeldenummer: 07786375.1
(22) Anmeldetag: 27.07.2007
(51) Int. Cl.: B23B 27/10, B23B 27/16, B23C 5/04, B23D 13/00

(54) **WERKZEUGSYSTEM**
TOOL SYSTEM
SYSTÈME D'OUTILLAGE

(30) Priorität: 29.07.2006 DE 102006035182
(43) Veröffentlichungstag der Anmeldung: 22.04.2009
(73) Patentinhaber: Hartmetall-Werkzeugfabrik Paul Horn GmbH, 72072 Tübingen (DE)
(72) Erfinder: NOUREDDINE, Hassan, 72147 Nehren (DE)
(74) Vertreter: Keck, Stephan
(86) Internationale Anmeldenummer: PCT/EP2007/006661
(87) Internationale Veröffentlichungsnummer: WO 2008/014932

(56) Entgegenhaltungen:
- EP-A- 1 080 812
- WO-A-00/02692
- WO-A-94/15741
- DE-U1- 9 203 373

## Beschreibung

Die Erfindung betrifft ein Werkzeugsystem mit einem Halter und einem eine Werkzeugschneide und ein Festlegeteil aufweisenden Schneidwerkzeug gemäß der Merkmalsausgestaltung des Oberbegriffes des Patentanspruches 1.

Im Stand der Technik sind Werkzeugsysteme für die Metallbearbeitung bekannt, die in Zusammenwirkung mit einer rotierenden Antriebsspindel oder mit einem nicht rotierenden Maschinensupport ein rotierendes oder nicht rotierendes Bearbeitungswerkzeug bilden. Beispielsweise zeigt die DE 34 48 086 C2 ein Werkzeug für eine Innenbearbeitung. In Verbindung mit einer Bearbeitungsmaschine, die dem Halter eine Translationsbewegung vermittelt, können derartige Werkzeugsysteme auch als Stoßwerkzeug Verwendung finden.

In der Regel werden solche Werkzeugsysteme, vorzugsweise mit aus einem Hartmetallwerkstoff bestehenden Schneidwerkzeug, für Bearbeitungsvorgänge benutzt, die mit hoher Genauigkeit durchzuführen sind. Um die Einhaltung entsprechend enger Toleranzen zu gewährleisten und um eine hohe Güte der jeweils bearbeiteten Werkstückflächen zu erzielen, ist eine sichere und starre Befestigung des Schneidwerkzeuges am Halter von ausschlaggebender Bedeutung, wobei sichergestellt sein muss, dass über die Werkzeugschneide auf das Festlegeteil einwirkende Schneidkräfte nicht zu Abweichungen der Zentrierung oder Positionierung des Schneidwerkzeuges führen. Die bekannten Werkzeugsysteme werden dieser Anforderung nicht in ausreichendem Maße gerecht. Dadurch, dass für die Werkzeugschneide ein Überstand über den Halter vorgesehen sein muss, um die spanende Bearbeitung in außerhalb der Kontur des Halters gelegenen Bereichen zu ermöglichen, wirkt die Schneidkraft an einer relativ zum Halter auskragenden Stelle des Systems, wodurch am Festlegeteil des Schneidwerkzeuges Kräfte und Momente auftreten, die die starre und sichere Festlegung beeinträchtigen.

Demgemäß ist in dem deutschen Gebrauchsmuster 299 11 894 U1 zur Vermeidung der dahingehenden Nachteile bei einem gattungsgemäßem Werkzeugsystem bereits vorgeschlagen worden, die Werkzeugschneide für eine spanende Bearbeitung um einen vorgebbaren Überstand über den Halter des Werkzeugsystems vorstehend zu lassen, wobei der Halter außenumfangsseitig mit einem Abstützteil versehen ist, das in Richtung auf den Überstand der Werkzeugschneide vorspringt und eine Abstützfläche für eine zumindest teilweise Anlage des Schneidwerkzeuges bildet. Bei der bekannten Lösung besitzt der Halter die Form eines eine Längsachse definierenden Schaftes, wobei das genannte Abstützteil durch einen, bezogen auf die Längsachse, aus der Umfangsfläche des Schaftes radial vorstehenden, mit diesem einstückigen Abstützkörper gebildet ist, und wobei der Schaft wiederum zumindest an seinem freien Ende eine an dessen Stirnfläche und dessen Umfang offene Vertiefung als Sitz für die Aufnahme eines Festlegeteiles des Schneidwerkzeuges bildet. Bei der bekannten Lösung sind in verschiedenen Schneidebenen verteilt und in mehreren gleich ausgebildeten Aufnahmen des Halters Schneidkörper als Schneidwerkzeuge eingesetzt, wobei das jeweilige Schneidwerkzeug sich vollflächig an einem bogen- oder wellenförmig verlaufenden Vertiefungsgrund als Sitz im Halter für eine spanende Bearbeitung abstützt. Dergestalt kann nicht ausgeschlossen werden, dass es zu statischen Überbestimmungen bei der Festlegung des Werkzeuges in der Aufnahme kommt, was die Bearbeitungsgenauigkeit beeinträchtigen könnte. Auch ist bereits aufgrund der Vielzahl an eingesetzten Schneidwerkzeugen mit der hierfür vorgesehenen speziellen bogenförmigen Halterung eine besonders steife Gesamtauslegung des Werkzeugsystems nicht erreichbar, was sich wiederum nachteilig auf die Bearbeitungsgenauigkeit auswirken kann.

Im Hinblick hierauf stellt sich die Erfindung die Aufgabe, ein Werkzeugsystem zur Verfügung zu stellen, das bei kostengünstiger Realisierung eine besonders starre und gegen hohe Belastungen sichere Festlegung des Schneidwerkzeugs am Halter gewährleistet. Erfindungsgemäß ist diese Aufgabe durch ein Werkzeugsystem gelöst, das die Merkmale des Patentanspruches 1 in seiner Gesamtheit aufweist.

Dadurch, dass gemäß dem kennzeichnenden Teil des Patentanspruches 1 das Schneidwerkzeug zumindest über den Großteil des Festlegeteiles einen im großen Ganzen keilförmigen Umriss mit Seitenwänden besitzt, die, von einem der Werkzeugschneide entgegengesetzten Scheitelbereich ausgehend, V-förmig divergieren, dass der Sitz des Halters für die Zusammenwirkung mit den Seitenwänden des Festlegeteiles des Schneidwerkzeuges Sitzwände mit von einem Vertiefungsgrund radial nach außen, und zumindest teilweise ebenso V-förmig divergierenden Verlauf besitzt, und dass der Scheitelbereich des Schneidwerkzeugs einen vorgebbaren freien Abstand zu dem Boden des Vertiefungsgrundes aufweist, ist das Schneidwerkzeug nicht nur innerhalb des Umfangsbereiches des Halters gegen die Arbeitsbelastungen abgestützt, sondern auch in einem außerhalb des Umfangsbereiches des Halters gelegenen Bereich, d. h. an der Stelle, die der auskragenden Werkzeugschneide benachbart ist. Schneidkräfte und erzeugte Momente werden daher in unmittelbarer Nachbarschaft der Angriffsstelle über das vorspringende Abstützteil in den Halter eingeleitet, was zu einer Verringerung der am Festlegeteil des Schneidwerkzeuges wirkenden Lastmomente beiträgt.

Aufgrund der V-förmigen Ausgestaltung für den Sitz des Schneidwerkzeuges unter entsprechender aussparender Freilassung durch den Vertiefungsgrund des Sitzes sind statische Überbestimmungen vermieden und unabhängig von der möglichen Toleranzsituation justiert sich das Schneidwerkzeug selbsttätig und positionsgenau zwischen den V-förmig divergierenden Sitzwänden des Halters. Dadurch, dass der Vertiefungsgrund gegenüber dem benachbarten Ende des Schneidwerkzeuges in Form des Scheitelbereiches frei geschnitten ist, sind insoweit statische Überbestimmungen vermieden und ein funktionsfähiger Toleranzausgleich, betreffend das System aus Halter und Schneidwerkzeug geschaffen. Insgesamt ist mit der erfindungsgemäßen Lösung ein sehr starrer funktionssicherer Aufbau erreicht, der sich kostengünstig realisieren läßt. Bei der Bearbeitung auftretende in den Halterschaft eingeleitete Schwingungen lassen sich dergestalt weitestgehend vermeiden oder zumindest sicher beherrschen.

Bei einer bevorzugten Ausführungsform des erfindungsgemäßen Werkzeugsystems ist vorgesehen, dass die radial nach außen divergierenden Sitzwände des Halters in Richtung der Längsachse desselben in den Vertiefungsgrund ausmünden, der eine demgegenüber erweiterte, vorzugsweise kreisbogenförmig verlaufende Innenwand aufweist, die Teil des Bodens des Vertiefungsgrundes ist. Durch die dahingehende Ausnehmung in Form des ausgesparten Vertiefungsgrundes im Halter ist, bezogen auf die V-Form der Verbindungslösung, zwischen Seiten- und Sitzwänden eine Art Zangengriff realisiert, was große Halte- und Abstützkräfte ermöglicht. Vorzugsweise ist hierbei vorgesehen, dass der Durchmesser des Kreisbogens für den Vertiefungsgrund größer gewählt ist, als der freie Eingangsquerschnitt, in den die V-förmigen Sitzwände in den Vertiefungsgrund ausmünden. Vorzugsweise beträgt der Öffnungswinkel für die V-Form etwa 30 bis 45 Grad.

Bei weiteren besonders vorteilhaften Ausführungsbeispielen bildet der Schaft zumindest an seinem freien Ende einen Rotationskörper, wobei eine an dessen Stirnfläche und dessen Umfang offene Vertiefung einen Sitz für die Aufnahme des Festlegeteiles des Schneidwerkzeuges bildet.

Die Anordnung kann hierbei so getroffen sein, dass der Abstützkörper derart axial an den Sitz angrenzt, dass seine zur vorderen Stirnfläche des Schaftes weisende Abstützfläche eine über den Umfang des Rotationskörpers radial vorstehende Fortsetzung der rückwärtigen Endfläche des Sitzes bildet. Somit bildet der Abstützkörper zusammen mit der rückwärtigen Endfläche des Sitzes eine durchgehende Abstützfläche für das Schneidwerkzeug, das mit einer ebenen Anlagefläche seines Festlegeteiles in formschlüssiger Anlage an der ebenen rückwärtigen Endfläche des Sitzes und der diese fortsetzenden Abstützfläche des Abstützkörpers anliegen kann. Mit anderen Worten gesagt, ergibt sich somit eine flächige Anlage, ausgehend vom Grund der Vertiefung bis zum radial außenliegenden Ende des Abstützkörpers.

Wenn das Werkzeugsystem für eine Bearbeitung vorgesehen ist, bei der entlang der Längsachse wirkende Kraftkomponenten der Schneidkraft auftreten, wenn beispielsweise das Werkzeugsystem als Stoßwerkzeug vorgesehen ist, sind vorzugsweise die Anlagefläche des Festlegeteiles, die rückwärtige Endfläche des Sitzes und die sich daran anschließende Abstützfläche des Abstützkörpers in einer Radialebene gelegen.

Bei besonders vorteilhaften Ausführungsbeispielen besitzt das Schneidwerkzeug die Gestalt eines vorzugsweise aus einem Hartmetallwerkstoff gebildeten Blockes, dessen Schneidenteil einen Fortsatz des Festlegeteiles bildet, wobei dieser das Schneidenteil bildenden Fortsatz derart geformt ist, dass er den Überstand der Werkzeugschneide über den Halter und den Abstützkörper hinaus bildet, und wobei der Fortsatz mit einer Endfläche als Teil der Anlagefläche mit der Abstützfläche des Abstützkörpers zusammenwirkt und die Werkzeugschneide zumindest eine Schneidkante aufweist, die an oder bei der der Stirnfläche des Halters zugewandten Vorderseite des Schneidenteiles gelegen ist.

Hierbei kann zumindest eine Hauptschneide vorhanden sein, die sich an der Vorderseite des Fortsatzes in einer zur Abstützfläche parallelen Ebene erstreckt. Bei translatorischer Bewegung des Halters bildet das System hierbei ein Stoßwerkzeug.

Für eine zweckmäßige Spanformung kann hierbei vorgesehen sein, dass die der rückwärtigen Endfläche entgegengesetzte vordere Seite des Fortsatzes eine sich an die Hauptschneide anschließende Spanfläche mit geringer Wölbung aufweist, die so gewählt ist, dass sich, abhängig von den Eigenschaften des Werkstückes, den Schneidbedingungen und dergleichen, der gewünschte Spanfluß ergibt.

Um optimale Sitzverhältnisse zu gewährleisten, ist vorzugsweise die Anordnung so getroffen, dass die mit den Sitzwänden zusammenwirkenden Seitenwände des Festlegeteiles des Schneidwerkzeuges von der Ebene abweichende Teilbereiche aufweisen, wobei beispielsweise eine ballige Formgebung im Kontaktbereich zwischen Seitenwänden und Sitzwänden vorgesehen ist.

Nachstehend ist die Erfindung anhand der Zeichnungen im Einzelnen erläutert. Es zeigen:
- Fig. 1 eine auseinander gezogen gezeichnete perspektivische Schrägansicht eines Ausführungsbeispieles des erfindungsgemäßen Werkzeugsystems;
- Fig. 2 eine gegenüber Fig. 1 vergrößert gezeichnete perspektivische Schrägansicht lediglich des vorderen Endabschnittes des Halters des Ausführungsbeispieles ohne angebrachtes Schneidwerkzeug;
- Fig. 3 eine in noch größerem Maßstab dargestellte perspektivische Schrägansicht lediglich eines Schneidwerkzeuges für die Benutzung beim erfindungsgemäßen Werkzeugsystem und
- Fig. 4 und 5 in näherungsweise dem gleichen Maßstab wie Fig. 2 gezeichnete perspektivische Schrägansichten zweier unterschiedlich gestalteter Schneidwerkzeuge für das erfindungsgemäße Werkzeugsystem.

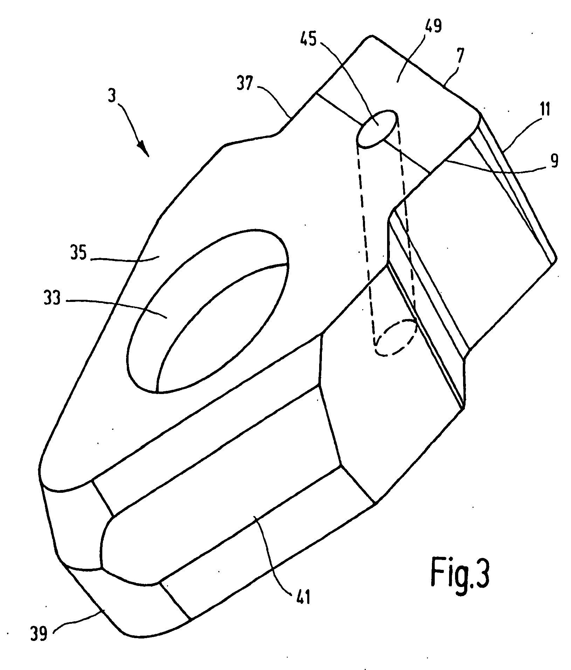

Nachstehend ist die Erfindung anhand eines Ausführungsbeispieles erläutert, bei dem das Werkzeugsystem ein Stoßwerkzeug bildet, wobei der Halter 1 mit dem an ihm stirnseitig festgelegten Schneidwerkzeug 3 in Richtung der Halterlängsachse 5 bewegt wird, um eine Stoßbearbeitung mit einer Hauptschneide 7 des Schneidwerkzeuges 3 an einem nicht gezeigten Werkstück durchzuführen, wobei sich die Hauptschneide 7 senkrecht zur Längsachse 5 erstreckt. Beim Einsatz als Stoßwerkzeug wirkt beim Arbeitsvorgang eine Schneid- oder Arbeitskraft, die größtenteils entlang der Längsachse 5 gerichtet ist. Bei einer alternativen Anwendung des Werkzeugsysterns für Drehbearbeitung oder Bohrbearbeitung, bei denen ein Zerspanungsvorgang an neben der Hauptschneide 7 gelegenen Schneidkanten 9 und/oder 11 stattfinden kann, s. Fig.3, ergibt sich ebenfalls eine Kraftkomponente entlang der Längsachse 5.

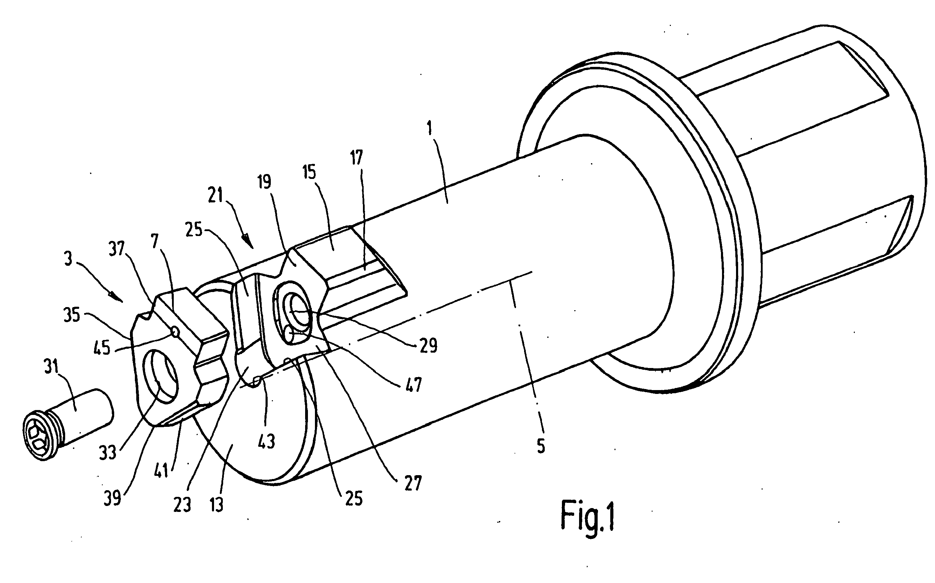

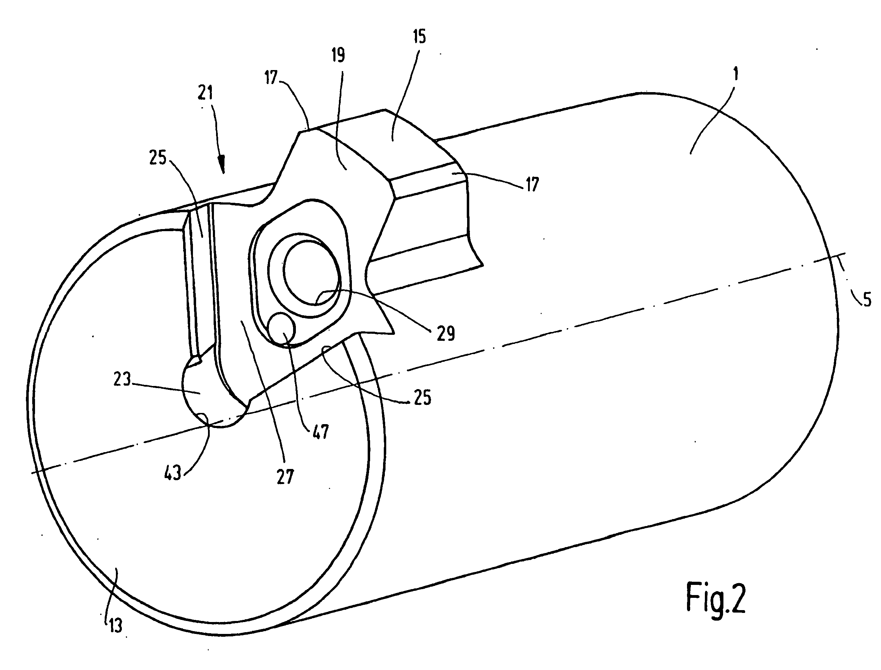

Fig.1 und 2 verdeutlichen die bei der Erfindung vorgesehene Abstützung des Schneidwerkzeuges 3 am Halter 1, der die Form eines einen Rotationskörper bildenden Schaftes besitzt, wobei in der Nähe der Stirnfläche 13 des Halters 1 ein mit diesem einstückig ausgebildeter Abstützkörper 15 radial vorstehend ausgebildet ist. Der Abstützkörper 15 besitzt die Form eines zu seiner Ober- oder Außenseite hin leicht abgeschrägten Klotzes, der, abgesehen von seinen Abschrägungen 17, einen etwa quadratischen Querschnitt besitzt. An seiner der Stirnfläche 13 zugewandten Seite bildet der Abstützkörper 15 eine in einer Radialebene liegende ebene Abstützfläche 19. Diese befindet sich von der vorderen Stirnfläche 13 des Halters 1 in einem axialen Abstand, welcher der axialen Erstreckung eines am Halter 1 befindlichen Sitzes 21 entspricht, in dem das Schneidwerkzeug 3 aufnehmbar und darin festlegbar ist.

Wie aus Fig. 1 und 2 erkennbar ist, ist der Sitz 21 durch eine an der Stirnfläche 13 und am Umfang des Halters 1 offene Vertiefung gebildet. Diese weist, ausgehend vom Vertiefungsgrund 23, der in der Nähe der Längsachse 5 gelegenen ist, Sitzwände 25 auf, die sich, ausgehend vom Grund 23 und zueinander divergierend, zum Außenumfang des Halters 1 hin erstrekken. Der Aufnahmeraum des Sitzes 21 für das Schneidwerkzeug 3 hat daher einen V-förmigen Querschnitt.

Die rückwärtige Endfläche 27 des Sitzes 21 liegt in gemeinsamer Ebene mit der Abstützfläche 19 des Abstützkörpers 15, so dass die Abstützfläche 19 eine unmittelbare Fortsetzung der hinteren Endfläche 27 des Sitzes 21 bildet. Somit steht für das im Sitz 21 festgelegte Schneidwerkzeug 3 eine durchgehende, plane Kontaktfläche zur Verfügung, die sich über den Außenumfang des Halters 1 hinaus radial mit der Abstützfläche 19 des Abstützkörpers 15 fortsetzt.

Das Schneidwerkzeug 3 weist an seiner der vorderen Schneide 7 entgegengesetzten Rückseite eine plane Anlagefläche auf, die, wenn das Schneidwerkzeug 3 im Sitz 21 aufgenommen ist, formschlüssig an der hinteren Enfläche 25 und der sie radial fortsetzenden Abstützfläche 19 anliegt. Wie aus Fig.1 und 2 zur ersehen ist, befindet sich am Übergangsbereich zwischen Endfläche 27 und Abstützfläche 19 eine Gewindebohrung 29 für eine Spannschraube 31 in Form einer eine Durchgangsbohrung 33 im Schneidwerkzeug 3 durchgreifenden Senkkopfschraube, mittels deren das Schneidwerkzeug 3 im Sitz 21 festspannbar ist, wobei sich der Festlegeteil 35 des Schneidwerkzeuges 3 mit Seitenwänden 41 in seitlicher Anlage an den Sitzwänden 25 befindet und der der Schneide 7 benachbarte Schneidenteil 37 des Schneidwerkzeuges 3 an der Abstützfläche 19 des Abstützkörpers anliegt.

Wie ebenfalls aus den Figuren ersichtlich, hat das Festlegeteil 35 des blockförmig gestalteten Schneidwerkzeuges 3 im großen Ganzen eine Keilform, die dem V-förmigen Aufnahmequerschnitt des Sitzes 21 angepaßt ist, wobei die Keilform im unteren Scheitelbereich 39 abgerundet ist. Die sich vom Scheitelbereich 39 divergierend erstreckenden Seitenwände 41 des Festlegeteils 35 weisen von der ebenen Gestalt abweisende Flächenbereiche oder eine gewisse ballige Formgebung für eine optimale Anlage an den Sitzwänden 25 auf. Wie Fig. 1 und 2 zeigen, sind die Enden der Sitzwände 25 am Grund 23 der den Sitz 21 bildenden Vertiefung durch eine Ausnehmung 43 in Form einer Teilbohrung voneinander getrennt, so dass am Grund 23 ein Freiraum zwischen Halter 1 und Scheitelbereich 39 des im Sitz 21 aufgenommenen Schneidwerkzeuges erzeugt wird.

Wie Fig.3 zeigt, weist das Schneidwerkzeug 3 einen Kanal 45 für ein KühlSchmiermittel auf, wobei der Kanal 45 in der Nähe der Hauptschneide 7 mündet. Bei im Sitz 21 aufgenommenem Schneidwerkzeug 3 befindet sich der Eingang des Kanals 45 an der Austrittsöffnung 47 einer in üblicher Weise im Halter 1 befindlichen Zuführleitung (nicht gezeigt).

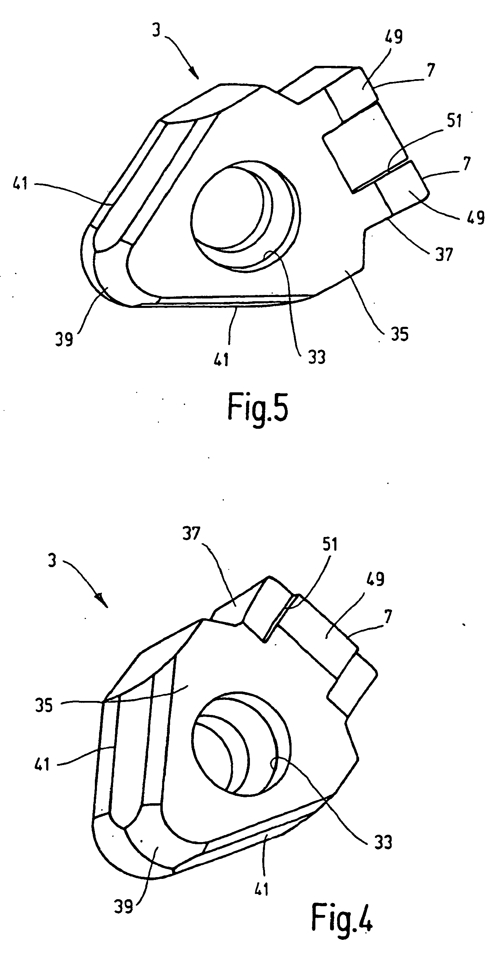

Fig. 4 und 5 zeigen zwei unterschiedliche Gestaltungen der Hauptschneide 7 des Schneidwerkzeuges 3. Während beim Beispiel von Fig. 4 eine zentral gelegene Hauptschneide 7 vorhanden ist, an die sich seitlich zurückgenommene Randbereiche des Schneidenteils 37 anschließen, ist beim Beispiel von Fig.5 die Hauptschneide im zwei seitliche Schneiden 7 unterteilt, zwischen denen sich ein zurückgesetzter Zentralteil des Schneidenteils 37 befindet. Wie ebenfalls aus Fig. 4 und 5 erkennbar, schließt sich an die jeweilige Schneide 7 kein planer Flächenabschnitt an, sondern eine Spanfläche 49, die eine leicht schaufelförmige Wölbung 51 aufweist, um beim Arbeitsvorgang eine optimale Spanformbildung zu begünstigen.

## Patentansprüche

1. Werkzeugsystem mit einem Halter (1) und einem eine Werkzeugschneide (7) und ein Festlegeteil (35) aufweisenden Schneidwerkzeug (3), wobei die Werkzeugschneide (7) für eine spanende Bearbeitung um einen vorgebbaren Überstand über den Außenumfang des Haiters (1) vorsteht, wobei der Halter (1) außenumfangseitig mit einem Abstützteil (15) versehen ist, das in Richtung auf den Überstand der Werkzeugschneide (7) vorspringt und eine Abstützfläche (19) für eine zumindest teilweise Anlage des Schneidwerkzeuges (3) bildet, wobei der Halter die Form eines eine Längsachse (5) definierenden Schaftes (1) besitzt, wobei das Abstützteil (15) durch eine, bezogen auf die Längsachse (5), aus der Umfangsfläche des Schaftes (1) radial vorstehenden, mit diesem einstückigen Abstützkörper gebildet ist, wobei der Schaft (1) zumindest an seinem freien Ende eine an dessen Stirnfläche (13) und dessen Umfang offene Vertiefung als Sitz (21) für die Aufnahme eines Festlegeteiles (35) des Schneidwerkzeuges (3) bildet, **dadurch gekennzeichnet, dass** das Schneidwerkzeug (3) zumindest über den Großteil des Festlegeteiles (35) einen im großen Ganzen keilförmigen Umriss mit Seitenwänden (41) besitzt, die, von einem der Werkzeugschneide (7) entgegengesetzten Scheitelbereich (39) ausgehend, V-förmig divergieren, dass der Sitz (21) des Halters (1) für die Zusammenwirkung mit den Seitenwänden (41) des Festlegeteiles (35) des Schneidwerkzeuges (3) Sitzwänden (25) mit von einem Vertiefungsgrund (23) radial nach außen, und zumindest teilweise ebenso V-förmig divergierenden Verlauf besitzt, und dass der Scheitelbereich (39) des Schneidwerkzeugs (3) einen vorgebbaren freien Abstand zu dem Boden des Vertiefungsgrundes (23) aufweist.

2. Werkzeugsystem nach Anspruch 1, **dadurch gekennzeichnet, dass** die radial nach außen divergierenden Sitzwände (25) des Halters (1) in Richtung der Längsachse (5) desselben in den Vertiefungsgrund (23) ausmünden, der eine demgegenüber erweiterte, vorzugsweise kreisbogenförmig verlaufende Innenwand aufweist, die Teil des Bodens des Vertiefungsgrundes (23) ist.

3. Werkzeugsystem nach Anspruch 2, **dadurch gekennzeichnet, dass** der Durchmesser des Kreisbogens für den Vertiefungsgrund (23) größer gewählt ist als der freie Eingangsquerschnitt, in den die V-förmigen Sitzwände (25) in den Vertiefungsgrund (23) ausmünden.

4. Werkzeugsystem nach Anspruch 2 oder 3, **dadurch gekennzeichnet, dass** der Vertiefungsgrund (23) benachbart zu der Längsachse (5) des Halters (1) angeordnet ist, oder dass die Längsachse (5) durch den Boden des Vertiefungsgrundes (23) geht, oder innerhalb der freien Öffnung des Vertiefungsgrundes (23) verläuft.

5. Werkzeugsystem nach einem der Ansprüche 1 bis 4, **dadurch gekennzeichnet, dass** der Abstützkörper (15) derart axial an den Sitz (21) angrenzt, dass seine zur vorderen Stirnfläche (13) des Schaftes (1) weisende Abstützfläche (19) eine über den Umfang des Rotationskörpers radial vorstehende Fortsetzung der rückwärtigen Endfläche (27) des Sitzes (21) bildet.

6. Werkzeugsystem nach Anspruch 5, **dadurch gekennzeichnet, dass** das Festlegeteil (35) des Schneidwerkzeuges (3) eine ebene Anlagefläche für eine formschlüssige Anlage an der ebenen rückwärtigen Endfläche (27) des Sitzes (21) und der diese fortsetzenden Abstützfläche (19) des Abstützkörpers (15) aufweist.

7. Werkzeugsystem nach Anspruch 6, **dadurch gekennzeichnet, dass** Anlagefläche des Festlegeteiles (35), rückwärtige Endfläche (27) des Sitzes (21) und die sich daran anschließende Abstützfläche (19) des Abstützkörpers (15) zur Aufnahme von entlang der Längsachse (5) wirkenden Kraftkomponenten der Schneidkraft in einer Radialebene gelegen sind.

8. Werkzeugsystem nach einem der Ansprüche 5 bis 7, **dadurch gekennzeichnet, dass** das Schneidwerkzeug (3) die Gestalt eines vorzugsweise aus einem Hartmetallwerkstoff gebildeten Blockes besitzt, dessen Schneidenteil (37) einen Fortsatz des Festlegeteiles (35) bildet, wobei der Fortsatz derart geformt ist, dass er den Überstand der Werkzeugschneide (7) über den Halter (1) und den Abstützkörper (15) hinaus bildet, und wobei der Fortsatz mit einer Endfläche als Teil der Anlagefläche mit der Abstützfläche (19) des Abstützkörpers (15) zusammenwirkt und die Werkzeugschneide (7) zumindest eine Schneidkante aufweist, die an oder bei der der Stirnfläche (13) zugewandten Vorderseite des Schneidenteiles (37) gelegen ist.

9. Werkzeugsystem nach Anspruch 8, **dadurch gekennzeichnet, dass** zumindest eine Hauptschneide (7) vorhanden ist, die sich an der Vorderseite des Fortsatzes in einer zur Abstützfläche (19) parallelen Ebene erstreckt.

10. Werkzeugsystem nach Anspruch 9, **dadurch gekennzeichnet, dass** die vordere Seite des Fortsatzes eine sich an die Hauptschneide (7) anschließende Spanfläche (49) mit geringer Wölbung (51) aufweist.

11. Werkzeugsystem nach einem der Ansprüche 1 bis 10, **dadurch gekennzeichnet, dass** die mit den Sitzwänden (25) zusammenwirkenden Seitenwände (41) des Festlegeteiles (35) des Schneidwerkzeuges (3) von der Ebene abweichende Teilbereiche aufweisen.

12. Werkzeugsystem nach Anspruch 11, **dadurch gekennzeichnet, dass** der Grund (23) der den Sitz (21) bildenden Vertiefung des Schaftes (1) eine einen Abstand zwischen dem Scheitel der Keilform des Festlegeteiles (35) bildende Ausnehmung (43) und/oder der Scheitelbereich (39) des Festlegeteiles (35) eine diesen Abstand erzeugende Verkürzung aufweist bzw. aufweisen.

## Claims

1. A tool system comprising a holder (1) and a cutting tool (3) that has a tool cutter (7) and a fixing part (35), the tool cutter (7), for the purpose of chip-removing machining, projecting beyond the outer circumference of the holder (1) by a predefinable projecting length, the holder (1) being provided, on its outer circumference, with a supporting part (15) that projects in the direction of the projecting length of the tool cutter (7) and constitutes a supporting surface (19) for at least partial bearing contact of the cutting tool (3), the holder having the shape of a shank (1) that defines a longitudinal axis (5), the supporting part (15) being constituted by a supporting body that projects radially, relative to the longitudinal axis (5), from the circumferential surface of the shank (1) and is realized as a single piece with the latter, the shank (1) constituting, at least at its free end, a recess as a seat (21) for receiving a fixing part (35) of the cutting tool (3), which recess is open at the end face (13) of the shank and on the circumference of the shank,
**characterized in that** the cutting tool (3), at least over the greater portion of the fixing part (35), has an overall wedge-shaped outline with side walls (41) that, starting from a vertex region (39) opposite the tool cutter (7), diverge in a V shape, that the seat (21) of the holder (1), for the purpose of acting in combination with the side walls (41) of the fixing part (35) of the cutting tool (3), has side walls (25) having a configuration that diverges radially outwards and, at least partially, likewise in a V shape from a recess base (23), and that the vertex region (39) of the cutting tool (3) is at a predefinable clear distance from the bottom of the recess base (23).

2. The tool system as claimed in claim 1, **characterized in that** the radially outwardly diverging seat walls (25) of the holder (1) open out, in the direction of the longitudinal axis (5) of same, into the recess base (23), which has an inner wall that is widened in comparison therewith, preferably extends in the form of an arc and is part of the bottom of the recess base (23).

3. The tool system as claimed in claim 2, **characterized in that** the diameter of the arc for the recess base (23) is selected to be greater than the clear entry cross-section into which the V-shaped seat walls (25) open out into the recess base (23).

4. The tool system as claimed in claim 2 or 3, **characterized in that** the recess base (23) is arranged adjacently to the longitudinal axis (5) of the holder (1), or **in that** the longitudinal axis (5) goes through the bottom of the recess base (23), or extends within the clear opening of the recess base (23).

5. The tool system as claimed in any one of claims 1 to 4, **characterized in that** the supporting body (15) adjoins the seat (21) axially in such a way that its supporting surface (19) facing towards the front end face (13) of the shank (1) constitutes a continuation of the rear end surface (27) of the seat (21), which continuation radially projects beyond the circumference of the body of revolution.

6. The tool system as claimed in claim 5, **characterized in that** the fixing part (35) of the cutting tool (3) has a flat bearing contact surface for positive bearing contact on the flat, rear end surface (27) of the seat (21) and on the supporting surface (19) of the supporting body (15), which supporting surface (19) is a continuation of this end surface (27).

7. The tool system as claimed in claim 6, **characterized in that** the bearing contact surface of the fixing part (35), the rear end surface (27) of the seat (21) and the supporting surface (19) of the supporting body (15) that adjoins the latter are located in a radial plane, for the purpose of absorbing force components of the cutting force that act along the longitudinal axis (5).

8. The tool system as claimed in any one of claims 5 to 7, **characterized in that** the cutting tool (3) has the shape of a block, preferably formed from a hard metal material, the cutter part (37) of which constitutes a continuation of the fixing part (35), the continuation being shaped in such a way that it constitutes the projecting length of the tool cutter (7) beyond the holder (1) and the supporting body (15), and the continuation, via its end surface as part of the bearing contact surface, acting in combination with the supporting surface (19) of the supporting body (15), and the tool cutter (7) having at least one cutting edge that is located on or near the front side of the cutter part (37) that faces towards the end face (13).

9. The tool system as claimed in claim 8, **characterized in that** there is at least one main cutter (7), which extends, on the front side of the continuation, in a plane parallel to the supporting surface (19).

10. The tool system as claimed in claim 9, **characterized in that** the front side of the continuation has, adjoining the main cutter (7), a cutting face (49) having a slight curvature (51).

11. The tool system as claimed in any one of claims 1 to 10, **characterized in that** the side walls (41) of the fixing part (35) of the cutting tool (3) that act in combination with the seat walls (25) have sub-regions deviating from the plane.

12. The tool system as claimed in claim 11, **characterized in that** the base (23) of the recess of the shank (1) constituting the seat (21) has an opening (43) constituting a distance from the vertex of the wedge shape of the fixing part (35) and/or the vertex region (39) of the fixing part (35) has a shortening producing this distance.

## Revendications

1. Système d'outillage, comportant un porte-outil (1) et un outil de coupe (3) muni d'un tranchant (7) et d'une partie de fixation (35), dans lequel pour un usinage par enlèvement de copeaux ledit tranchant (7) est en saillie au-delà du pourtour extérieur du porte-outil (1) sur une distance pouvant être prédéfinie, ledit porte-outil (1) étant muni sur le pourtour extérieur d'une pièce d'appui (15), qui s'avance en saillie dans la direction du porte-à-faux du tranchant (7) de l'outil et forme une surface d'appui (19) pour un appui au moins partiel de l'outil de coupe (3), ledit porte-outil ayant la forme d'une broche (1) définissant un axe longitudinal (5), ladite pièce d'appui (15) étant formée par un corps d'appui, qui s'avance radialement par rapport à l'axe longitudinal (5) hors du pourtour de la broche (1) et est réalisé d'un seul tenant avec celle-ci, ladite broche (1) formant au moins sur son extrémité libre un creux, qui est ouvert sur la face frontale (13) de celle-ci et sur le pourtour de celle-ci et forme un logement (21) destiné à recevoir une partie de fixation (35) de l'outil de coupe (3), **caractérisé en ce que** l'outil de coupe (3), au moins sur la majeure partie de la partie de fixation (35), a un contour dans l'ensemble en forme de cône avec des parois latérales (41), qui divergent en forme de V en partant d'une zone de sommet (39) opposée au tranchant (7) de l'outil, **en ce que**, pour la coopération avec les parois latérales (41) de la partie de fixation (35), le logement (21) du porte-outil (1) comporte des parois d'appui (25) avec un tracé orienté radialement vers l'extérieur depuis un fond de creux (23) et divergeant au moins partiellement également en forme de V, et **en ce que** la zone de sommet (39) de l'outil de coupe (3) comporte, par rapport à la base du fond de creux (23), une distance libre pouvant être prédéfinie.

2. Système d'outillage selon la revendication 1, **caractérisé en ce que** les parois d'appui (25) du porte-outil (1), qui divergent radialement vers l'extérieur, débouchent dans la direction de l'axe longitudinal (5) dudit porte-outil dans le fond de creux (23) qui, par rapport à ce dernier, comporte une paroi intérieure élargie, de préférence en forme d'arc de cercle, qui est une partie de la base du fond de creux (23).

3. Système d'outillage selon la revendication 2, **caractérisé en ce que** le diamètre de l'arc de cercle pour le fond de creux (23) est choisi plus grand que la section d'entrée libre, dans laquelle les parois d'appui (25) en forme de V débouchent dans le fond de creux (23).

4. Système d'outillage selon la revendication 2 ou 3, **caractérisé en ce que** le fond de creux (23) est disposé à proximité de l'axe longitudinal (5) du porte-outil (1), ou **en ce que** l'axe longitudinal (5) passe à travers la base du fond de creux (23) ou s'étend à l'intérieur de l'ouverture libre du fond de creux (23).

5. Système d'outillage selon l'une quelconque des revendications 1 à 4, **caractérisé en ce que** le corps d'appui (15) est adjacent axialement au logement (21), de telle sorte que sa surface d'appui (19), dirigée vers la face frontale (13) avant de la broche (1), forme sur la surface d'extrémité (27) arrière du logement (21) une saillie s'avançant radialement au-delà du pourtour du corps rotatif.

6. Système d'outillage selon la revendication 5, **caractérisé en ce que** la partie de fixation (35) de l'outil de coupe (3) comporte une surface de contact plane pour l'appui par conjugaison de forme contre la surface d'extrémité (27) arrière du logement (21) et la surface d'appui (19), prolongeant ladite surface d'extrémité, du corps d'appui (15).

7. Système d'outillage selon la revendication 6, **caractérisé en ce que** la surface de contact de la partie de fixation (35), la surface d'extrémité (27) arrière du logement (21) et la surface d'appui (19) du corps d'appui (15), laquelle prolonge ladite surface d'extrémité, sont disposées dans un plan radial pour absorber les composantes de la force de coupe, qui agissent le long de l'axe longitudinal (5).

8. Système d'outillage selon l'une quelconque des revendications 5 à 7, **caractérisé en ce que** l'outil de coupe (3) a la forme d'un bloc réalisé de préférence en carbure, dont la partie de coupe (37) forme une saillie de la pièce de fixation (35), ladite saillie étant configurée de telle sorte qu'elle forme le porte-à-faux du tranchant (7) de l'outil au-delà du porte-outil (1) et du corps d'appui (15), et ladite saillie coopérant, par une surface d'extrémité formant une partie de la surface de contact, avec la surface d'appui (19) du corps d'appui (15), et le tranchant (7) de l'outil comporte au moins une arête de coupe qui est disposée au niveau ou à proximité de la face avant de la partie de coupe (37), orientée vers la face frontale (13).

9. Système d'outillage selon la revendication 8, **caractérisé en ce qu'**il est prévu au moins un tranchant principal (7), qui s'étend au niveau de la face avant de la saillie dans un plan parallèle à la surface d'appui (19).

10. Système d'outillage selon la revendication 9, **caractérisé en ce que** la face avant de la saillie comporte une face d'attaque (49), adjacente au tranchant principal (7) et réalisée avec une faible convexité (51).

11. Système d'outillage selon l'une quelconque des revendications 1 à 10, **caractérisé en ce que** les parois latérales (41) de la partie de fixation (35) de l'outil de coupe (3), lesquelles coopèrent avec les parois d'appui (25), comportent des zones partielles s'écartant du plan.

12. Système d'outillage selon la revendication 12, **caractérisé en ce que** le fond (23) du creux, formant le logement (21), de la broche (1) comporte un évidement (43) formant une distance par rapport au sommet de la forme conique de la partie de fixation (35), et/ou la zone de sommet (39) de la partie de fixation (35) comporte un raccourcissement générant cette distance.
